# EUROPEAN PATENT APPLICATION

(11) **EP 1 067 166 A2**
(43) Date of publication of application: **10.01.2001**
(21) Application number: 00114091.2
(22) Date of filing: 07.07.2000
(51) Int. Cl.: C09K 11/77, C09K 11/85, H01J 61/44

(54) **Ultraviolet luminescent material, ultraviolet fluorescent lamp using the material, and ultraviolet luminescent element using the material**

(30) Priority: 09.07.1999 JP 19624399; 26.07.1999 JP 21048999
(71) Applicant: NEC CORPORATION, Tokyo (JP)
(72) Inventor: Yoshida, Hisashi, Ohtsu-shi, Shiga (JP); Minamoto, Maki, Ohtsu-shi, Shiga (JP); Hayashi, Masato, Ohtsu-shi, Shiga (JP); Sakuragi, Shiro, Tonemachi, Kitasouma-gun, Ibaraki (JP); Hirai, Takeshi, Tonemachi, Kitasouma-gun, Ibaraki (JP); Sakuragi, Shinichiro, Tonemachi, Kitasouma-gun, Ibaraki (JP)
(74) Representative: VOSSIUS & PARTNER

(57) **Abstract**

A new ultraviolet emission material is provided. The material includes rare earth elements that participate in luminescence and comprise at least gadolinium, or at least gadolinium and praseodymium in a host crystal. A fluorescent layer (2) made of a rare earth activating fluorinated yttrium (YF₃:Gd,Pr) fluorescent material, that emits light by the excitation of vacuum ultraviolet rays, is formed on the inner wall of a light transmissible airtight container of a glass tube (1). Xenon gas and electrodes are enclosed in the glass tube (1). A photocatalytic layer (7) comprising an anatase crystal type of TiO₂ is formed on the outer surface of the glass tube (1). A high frequency voltage is applied to the cold cathodes (5, 6) so as to generate an electric discharge, and thereby vacuum ultraviolet rays of 172 nm are emitted from xenon. At that time, the fluorescent layer (2) efficiently emits near-ultraviolet rays. The photocatalytic layer (7) shows photocatalysis by the near-ultraviolet rays.

## Description

The present invention relates to an ultraviolet luminescent material, an ultraviolet fluorescent lamp using this material, and an ultraviolet luminescent element using this material, and, more particularly, to a luminescent material that efficiently emits near-ultraviolet rays, an ultraviolet fluorescent lamp using this material, which is suitable for photocatalysis, and an ultraviolet luminescent element applicable to an ultraviolet region solid laser.

In recent years, public interest in environmental problems has been increasing, and various countermeasures to them have been taken. For example, as a countermeasure against bad smells, a deodorizing apparatus has been developed which utilizes a photocatalytic action as described in Japanese Patent Publication No. Hei-6-44976. A main part of this apparatus includes a discharge lamp that emits ultraviolet rays of chiefly 254 nm, a photocatalytic layer of, for example, titanium oxide formed on the outer surface of the lamp, and an air blower. The ultraviolet rays emitted from the discharge lamp strike and activate the photocatalytic layer. As a result, the surface of the layer generates oxidizing/resolving power and oxidizes and resolves organic substances adhering or contacting therewith, thus exerting a deodorizing action to them. Air including disagreeable smells of nitrogen oxides, sulphur oxides, or the like, is then blown to the photocatalytic layer by the blower so as to resolve and remove the disagreeable smells from the air.

The apparatus, however, must be contrived to have a shield, for example, to prevent the leak of the ultraviolet rays because the ultraviolet rays of a wavelength of 254 nm emitted from mercury exert a great influence on the skin or eyes of the human body. Disadvantageously, this is an obstacle to reducing the size of the apparatus. In addition, a germicidal lamp generally used as an ultraviolet radiation source of 254 nm is of a hot cathode type, and, accordingly, there are problems in that the size of the lamp is relatively large, much heat is generated, and the lamp has a relatively short life of several thousand hours.

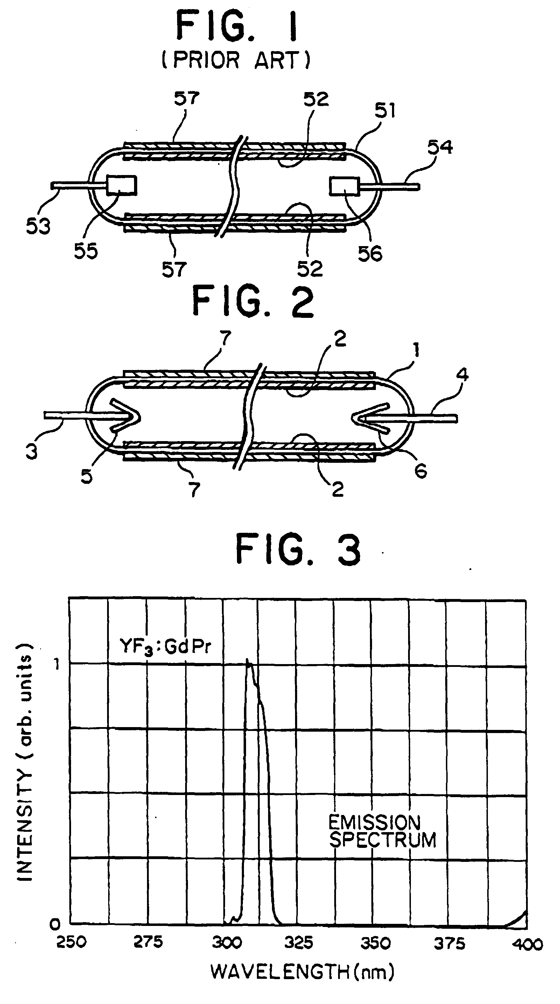

Thus, in order to solve the problems, Japanese Laid-open Patent Publication No. Hei-10-154488 discloses a fluorescent lamp for photocatalysis that is small in size, has a long life, and is superior in durability, and a cleaning apparatus. This lamp has a structure shown in Fig. 1, which is an enlarged sectional view of a main part of the lamp. A fluorescent layer 52 of a thickness of about 20-22 µm that radiates by ultraviolet ray excitation is formed on an inner wall of a glass tube 51 (outer diameter 4.0 mm, inner diameter 3.0 mm, and length 308 mm). Rare gas, such as argon, of several torr and mercury is enclosed inside the glass tube 51. Lead wires 53 and 54 are sealed in both ends of the glass tube 51, respectively. Cold cathodes 55 and 56 of nickel sleeves are attached to the ends of the lead wires 53 and 54, respectively. The inside of the cold cathodes 55 and 56 is filled with a Hg-Ti alloy as a mercury source and a Zr-Al alloy powder as a getter. The fluorescent layer 52 includes at least one kind of fluorescent material that is excited by ultraviolet rays of, for example, 254 nm emitted from mercury and emits near-ultraviolet rays whose wavelength is 300-400 nm, such as Sr B₄O₇:Eu²⁺(peak wavelength 365 nm), (Ba,Sr,Mg)₃Si₂O₇:Pb²⁺(peak wavelength 370 nm), or BaSi₂O₅:Pb²⁺(peak wavelength 350 nm) YPO₄:Ce³⁺(peak wavelength 357 nm). A photocatalytic layer 57 of a film thickness of 0.2-0.3 µm that is made of TiO₂ is integrally formed on the outer surface of the glass tube 51. The layer 57 is formed such that a glassy forming agent (P₂O₅) and a material produced by chelating a tetraisopropyl titanate monomer by means of glycerin and acetylacetone are added to an ethyl acetate ethanol mixed solvent, and the resulting mixed solution is then applied to the outer surface of the glass tube 21, and it is burned at 500°C for ten hours.

However, the fluorescent lamp including the aforementioned mercury brings about various disadvantageous phenomena. For example, discharge initiation becomes difficult because the vapor pressure of mercury decreases in a low temperature atmosphere in refrigerators or the like in winter; much time is consumed until the build up of optical output from the discharge initiation; the optical output is small after it is stabilized; and flickering occurs. Additionally, there is a fear that, if mercury is used, the mercury might leak out from the lamp and bring about environmental pollution because of a breakage accident when the lamp is manufactured, when it is transported, or when the spent lamp is collected. Additionally, a germicidal lamp has a problem in that ultraviolet rays of a wavelength of 254 nm emitted from mercury exert an enormous influence on the skin or eye of the human body because the rays travel through the glass container. Therefore, Japanese Laid-open Patent Publication No. Hei-9-129184 discloses a fluorescent lamp suitable for photocatalyais in which rare gas mainly composed of xenon is used as an electrical discharge medium without mercury, and a fluorescent layer is excited by vacuum ultraviolet rays emitted by the rare gas, thus emitting near-ultraviolet rays in a wavelength range of at least 300-400 nm. The fluorescent layer of this lamp uses at least one kind of fluorescent material among YPO₄:Ce, Ce(Mg,Ba)Al₁₁O₁₉, LaPO₄:Ce, and BaSi₃O₅:Pb.

By the way, the aforementioned fluorescent material that is excited by vacuum ultraviolet rays (200 nm or less in wavelength) emitted by mercury or rare gas and emits near-ultraviolet rays within a wavelength range of at least 300-400 nm is roughly practical in the emissive power of the near-ultraviolet rays, but never sufficient. Especially, in recent years, there has been a strong demand for ultraviolet fluorescent materials and ultraviolet fluorescent lamps that have heightened the emissive power of near-ultraviolet rays even more as the apparatus has been made smaller in size and lighter in weight.

It is a first object of the present invention to provide a new ultraviolet emission material that is excited by vacuum ultraviolet rays or the like and emits near-ultraviolet rays within a wavelength range of at least 300-400 nm efficiently. It is a second object of the present invention to provide an ultraviolet fluorescent lamp suitable for photocatalysis that has a fluorescent layer formed by an ultraviolet fluorescent material made of the ultraviolet emission material.

The ultraviolet emission material according to the present invention includes rare earth elements that participate in luminescence and comprise at least gadolinium (hereinafter, designated as Gd) in a host crystal. Further, the ultraviolet emission material according to the another aspect of the present invention includes rare earth elements that participate in luminescence and comprise at least gadolinium and praseodymium (hereinafter, designated as Pr) in a host crystal.

Gd acts as an emission center emitting near-ultraviolet rays. Because of interaction between Gd and Pr included together, a new ultraviolet emission material can be provided that emits stronger near-ultraviolet rays than Gd only.

More concretely, the ultraviolet emission material of the present invention is an ultraviolet fluorescent material having a host crystal and an activating agent, and, in the ultraviolet fluorescent material, at least gadolinium and praseodymium are the activating agent. Neither Gd nor Pr is a constituent element of the host crystal in this fluorescent material. Herein, the activating agent is an additive to the host crystal, and, naturally, is to contribute to luminescence. However, this is not necessarily a narrow meaning of an activating agent corresponding to a co-activating agent, but a broad meaning including the co-activating agent also. In the fluorescent material in which both Gd and Pr are activating agents, Pr is easily excited when vacuum ultraviolet rays are irradiated, energy is then transmitted from Pr to Gd, and, finally, Gd makes energy transition, thus emitting ultraviolet rays in the wavelength range of 300-400 nm efficiently.

Another feature of the present invention is that the ultraviolet emission material is an ultraviolet fluorescent material comprising a host crystal and an activating agent, and, in the fluorescent material, one of gadolinium and praseodymium constitutes the host crystal, and the other one is the activating agent. For example, when Gd is a constituent element of the host crystal, Pr serves as an activating agent, and, when Pr is a constituent element of the host crystal, Gd serves as an activating agent. Accordingly, in both situations, a new fluorescent material can be provided. Also in this fluorescent material, Pr is easily excited when vacuum ultraviolet rays are irradiated, energy is then transmitted from Pr to Gd, and, finally, Gd makes energy transition, thus emitting ultraviolet rays in the wavelength range of 300-400 nm efficiently.

Another feature of the present invention is that, if the host crystal does not include rare earth elements such as Gd or Pr, the host crystal is one or more kinds of halides selected from alkali metals, alkaline earth metals, yttrium, Lanthanum and zinc. If the host crystal includes rare earth elements such as Gd or Pr, the host crystal is one or more kinds of halides selected from those rare earth elements, alkali metals, alkaline earth metals, yttrium, Lanthanum and zinc.

As the halide, fluoride is suitable. A YF₃:Gd,Pr fluorescent material in which yttrium fluoride is a host crystal, and Gd and Pr are activating agents is also suitable. A (Yₓ,Gd₁₋ₓ)F₃:Pr fluorescent material in which Gd is a constituent element of a host crystal, and Pr is an activating agent is also suitable.

Another feature of the present invention is that an ultraviolet fluorescent lamp using the ultraviolet emission material of the present invention comprises a light transmissible airtight container; an electric discharge medium, enclosed in the light transmissible airtight container, for emitting vacuum ultraviolet rays; an electrode for an electric discharge; and a fluorescent layer formed in the light transmissible airtight container. Especially, the fluorescent layer includes the aforementioned ultraviolet emission materials.

With this structure, an ultraviolet fluorescent lamp can be provided that is suitable for photocatalysis and emits ultraviolet rays in the wavelength range of 300-400 nm efficiently by the excitation of vacuum ultraviolet rays emitted by a discharge medium.

Another feature of the present invention is that the ultraviolet fluorescent lamp further comprises a photocatalytic layer formed outside the light transmissible airtight container. With this structure, a fluorescent lamp for photocatalysis can be provided that emits ultraviolet rays in the wavelength range of 300-400 nm efficiently by the excitation of vacuum ultraviolet rays emitted by a discharge medium and shows excellent photocatalysis.

Another feature of the present invention is that the ultraviolet fluorescent lamp is a fluorescent lamp of a cold cathode or a hot cathode. With this structure, if the cold cathode is used, an ultraviolet fluorescent lamp can be provided that is small in size and has longevity and in which the emission power of near-ultraviolet rays is heightened. If the hot cathode is used, a lamp current can be enlarged, and thus the emission power of near-ultraviolet rays is heightened even more.

Another feature of the present invention is that the ultraviolet fluorescent lamp is a flat type fluorescent lamp. With this structure, a flat ultraviolet fluorescent lamp can be provided in which the emission power of near-ultraviolet rays is heightened, and an emission area of ultraviolet rays is large.

Another feature of the present invention is that the ultraviolet fluorescent lamp is an electrodeless fluorescent lamp. With this structure, a flat ultraviolet fluorescent lamp can be provided that is small in size, has longevity, is simple in structure, and is cheap, and in which the emission power of near-ultraviolet rays is heightened.

Further, the ultraviolet luminescent material of the present invention can provide an ultraviolet luminescent element applicable to, for example, a medium for a solid laser.
FIG. 1 is an enlarged sectional view of a main part of a conventional straight-tube type cold cathode fluorescent lamp for photocatalysis.
FIG. 2 is an enlarged sectional view of a main part of a straight-tube type cold cathode fluorescent lamp for photocatalysis showing a first embodiment of the present invention.
FIG. 3 is a graph showing an emission spectrum of a fluorescent layer made of a YF₃:Gd, Pr fluorescent material when it is excited by vacuum ultraviolet rays of a wavelength of 172 nm.
FIG. 4 is a graph showing an emission spectrum of a fluorescent layer made of a (Y, Gd)F₃:Pr fluorescent material when it is excited by vacuum ultraviolet rays of a wavelength of 172 nm.
FIG. 5 is a perspective view, with a part broken away, of a flat type fluorescent lamp for photocatalysis showing a tenth embodiment of the present invention.
FIG. 6A is an enlarged sectional view of a main part of another flat type fluorescent lamp for photocatalysis showing an eleventh embodiment of the present invention, and FIG. 6B is a plan view showing the shape of an electrode.
FIG. 7A is a side view of an electrodeless fluorescent lamp for photocatalysis showing a twelfth embodiment of the present invention, and FIG. 7B is a sectional view along line A-A of FIG. 7A.

A description will be provided of embodiments of an ultraviolet emission material of the present invention. A feature in the composition of the ultraviolet emission material of the present invention is to include at least a rare earth element of Gd serving as a luminescence center in a host crystal. In addition to Gd which is indispensable, one or more kinds of rare earth elements can be added. Pr is the best of the other rare earth elements. Therefore, the two rare earth elements of Gd and Pr are included most preferably. In this case, Gd and Pr participate in luminescence. Gd is an indispensable requirement. Especially, the combination of Gd and Pr is a structural requirement to improve the emissive power of near-ultraviolet rays. With Gd and Pr as indispensable, other rare earth elements can be added. When an ultraviolet emission material that includes both Gd and Pr is excited by various exciting means, in other words, when vacuum ultraviolet rays of a wavelength of, for example, 172nm or 185nm are applied, a Pr ion is easily excited, and then energy is transmitted from the Pr ion to a Gd ion, and finally the Gd ion makes energy transition, thus emitting ultraviolet rays within the wavelength range of 300-400nm. The inclusion of both Gd and Pr makes it possible to obtain a new luminescent material capable of emitting strong near-ultraviolet rays by the interaction of the two.

A concrete embodiment of the ultraviolet emission material of the present invention is, for example, a powdered ultraviolet fluorescent material. This can be classified as follows.
(1) A first one is a fluorescent material activated by Gd. In more detail, a material is applicable in which Gd acting as an activating agent is added to a host crystal comprising halide, oxide, silicate, phosphate, and borate of one or more kinds of metals selected from the group of alkali metals, alkaline earth metals, yttrium, Lanthanum and zinc. Especially, fluoride is suitable. For example, there is CaF₂:Gd.
(2) A second one is a fluorescent material that includes, more preferably, at least two kinds of rare earth elements of Gd and Pr, each as an activating agent, in the aforementioned host crystal. In this fluorescent material, Gd and Pr are small in concentration, and cannot be the main constituent elements in the host crystal. Fluoride is similarly suitable for this fluorescent material. For example, there are YF₃:Gd, Pr and CaF₂:Gd, Pr.
(3) A third one is a fluorescent material in which one of Gd and Pr constitutes the host crystal, and the other one acts as an activating agent. For example, the fluorescent material is such that Pr is an activating agent if Gd is a constituent element thereof, and Gd is an activating agent if Pr is a constituent element thereof. Whether it serves as a constituent element of the host crystal or as an activating agent depends on the difference in the compositional ratio of the raw material before the burning of the fluorescent material. As a host crystal in this case, use can be made of one or more elements of halide, oxide, silicate, phosphate, borate, etc., selected from the group of the aforementioned alkali metals, alkaline earth metals, yttrium, Lanthanum, zinc, and, additionally, a rare earth element such as Gd or Pr. Fluoride is suitable also for this fluorescent material. For example, (Yₓ,Gd₁₋ₓ)F₃:Pr, LiGdF₄:Pr, NaGdF₄:Pr, BaGdF₃:Pr, Li(Yₓ,Gd₁₋ₓ)F₄:Pr, Na(Yₓ,Gd₁₋ₓ) F₄:Pr, and Ba(Yₓ,Gd₁₋ₓ)F₅:Pr are applicable. Especially, (Yₓ,Gd₁₋ₓ)F₃:Pr is suitable. Herein, 0<x<1. Every one of them is an excellent ultraviolet fluorescent material that emits strong near-ultraviolet rays.

The manufacturing method of the ultraviolet fluorescent material will be briefly described taking the fluorescent material YF₃:Gd,Pr and the fluorescent material (Yₓ,Gd₁₋ₓ)F₃:Pr as examples. In the case of YF₃:Gd,Pr, first of all, YF₃ powder of 100 parts by weight, GdF₃ powder of 1 part by weight, and PrF₃ powder of 1 part by weight are sufficiently mixed. Thereafter, this compound is put into a halogenic crucible, and is maintained and burnt for about two hours at 900-1100°C (about 1000°C preferably) in the atmosphere. It is then cooled down to room temperature to obtain a fluorescent material of YF₃:Gd,Pr. Since the quantitative ratios of GdP₃ powder and PrF₃ powder with respect to YF₃ powder are each low, the concentration of Gd and Pr in the fluorescent material is small. Therefore, Gd and Pr act as activating agents. On the other hand, in the case of (Yₓ,Gd₁₋ₓ)F₃:Pr, first of all, YF₃ powder of 100 parts by weight, GdF₃ powder of 100 parts by weight, and PrF₃ powder of 1 part by weight are sufficiently mixed. Thereafter, this compound is put into a crucible, and is maintained and burnt for about two hours at 900-1100°C (about 1000°C preferably) in the atmosphere. It is then cooled down to room temperature to obtain a fluorescent material of (Y_{0.5,}Gd_{0.5})F₃:Pr. Since the quantitative ratios of YF₃ powder and GdP₃ powder are high at the same level, Gd constitutes the host crystal together with Y. Herein, x is 0.5. Since the quantitative ratio of PrF₃ powder is low, Pr acts as an activating agent in the fluorescent material. Other fluorescent materials can be similarly manufactured.

Another embodiment of the ultraviolet emission material of the present invention is a filmy ultraviolet fluorescent material. This is an approximately 1 µm-thick ultraviolet luminescent layer composed as described above which can be formed on an insulating substrate of, for example, glass or ceramic in accordance with a known film formation method such as spattering, deposition, or CVD. An extremely thin ultraviolet luminescent layer can be obtained in comparison with the aforementioned powdery ultraviolet fluorescent material.

Next, a description will be provided of an embodiment of an ultraviolet fluorescent lamp to which an ultraviolet emission material of the present invention, especially the aforementioned ultraviolet fluorescent material has been applied. A first embodiment of the ultraviolet fluorescent lamp according to the present invention is that, basically, mercury is not included in a light transmissible airtight container, an electrical discharge medium of rare gas mainly composed of xenon is enclosed, and a fluorescent layer that emits near-ultraviolet rays is formed on an inner wall of the container. The container of the lamp is formed with material through which near-ultraviolet rays are transmitted. The fluorescent layer includes a metal halide fluorescent material, activated by one or more kinds of rare earth elements including at least Gd, which is excited by vacuum ultraviolet rays (with a wavelength of 200 nm or less) emitted by rare gas mainly composed of xenon because of electrical discharge, thereby emitting near-ultraviolet rays in the wavelength range of 300-400 nm efficiently. This fluorescent material is characterized in that Gd is not included in the host crystal, but it is included in the activating agent. Various metals can be used as the aforementioned ones. Especially, one or more kinds of metals selected from the group of alkali metals, alkaline earth metals, yttrium, Lanthanum and zinc are suitable. For the rare earth elements as the activating agent, at least one kind of rare earth element selected from the group of Pr, europium (Eu), cerium (Ce), and terbium (Tb) is suitable in addition to Gd which is an indispensable element. Especially, Pr is suitable. When Pr is used together with Gd, the strength of near-ultraviolet rays emitted from Gd increases remarkably. Specifically, fluoride such as YF₃:Gd,Pr or CaF₂:Gd,Pr is suitable for the fluorescent material. It is speculated that, in these fluorescent materials, Pr as the activating agent is excited by the vacuum ultraviolet rays (for example, 172 nm ), energy is then transmitted from Pr to Gd by the interaction (resonance) with Gd, and Gd emits light strongly. As other activating agents, one or more kinds of rare earth elements, such as Eu, Ce, and Tb, can be further added in addition to Gd and Pr which are indispensable. Not only fluorine (F) but also a compound formed by bromine (Br), chlorine (Cl), and fluorine (F) that is a main element can be used as the halide of the host crystal. According to the aforementioned structure, an ultraviolet fluorescent lamp suitable for photocatalysis can be provided in which near-ultraviolet rays in the wavelength range of 300-400 nm are efficiently emitted by the excitation of vacuum ultraviolet rays (for example, xenon, 172 nm) that rare gas emits, and in which mercury is not used. An electrical discharge medium that comprises rare gas and mercury can be used as a modification. In this case, the fluorescent layer emits near-ultraviolet rays also by vacuum ultraviolet rays of 185 nm that mercury emits.

Similarly, a feature of the ultraviolet fluorescent lamp according to a second embodiment is that, basically, mercury is not included in a light transmissible airtight container, an electrical discharge medium of rare gas mainly composed of xenon is enclosed, and a fluorescent layer that emits near-ultraviolet rays is formed on an inner wall of the container. The fluorescent layer is characterized in that it includes a rare earth activation metal halogenic gadolinium compound fluorescent material, which is excited by vacuum ultraviolet rays (with a wavelength of 200 nm or less) emitted by rare gas because of electrical discharge, thereby emitting near-ultraviolet rays in the wavelength range of 300-400 nm efficiently. This fluorescent material includes Gd in the host crystal. Various metals can be used as the aforementioned ones. Especially, one or more kinds of metals selected from the group of alkali metals, alkaline earth metals, yttrium, Lanthanum and zinc are suitable. Various elements can be used as the rare earth element of the activating agent. Especially, when Pr is added, the strength of near-ultraviolet rays increases remarkably. It is speculated that Pr acting as the activating agent is excited by the vacuum ultraviolet rays (for example, 172 nm ), and Gd emits light by the interaction (resonance) with Gd of the host crystal. An activating agent in which a rare earth element, such as Eu, Ce, or Tb, is added in addition to Pr which is an indispensable element is also suitable. Not only fluorine (F) but also a compound formed by bromine (Br), chlorine (Cl), and fluorine (F) that is a main element can be used as the halide of the host crystal. Specifically, fluoride, for example, is suitable for the fluorescent material. For example, applicable ones are (Y,Gd)F₃:Pr, LiGdF₄:Pr, NaGdF₄:Pr, BaGdF₅:Pr, Li(Y,Gd)F₄:Pr, Na(Y,Gd)F₄:Pr, and Ba(Y,Gd)F₅:Pr. Especially, (Y,Gd)F₃:Pr is suitable. According to the aforementioned structure, an ultraviolet fluorescent lamp suitable for photocatalysis can be provided in which near-ultraviolet rays in the wavelength range of 300-400 nm are efficiently emitted by the excitation of vacuum ultraviolet rays (for example, with a wavelength of 172 nm) that rare gas emits, and in which mercury is not used. An electrical discharge medium that comprises rare gas and mercury can be used as a modification. In this case, the fluorescent layer also emits near-ultraviolet rays by vacuum ultraviolet rays of 185 nm that mercury emits.

The fluorescent layer is formed such that slurry in which a powder of the fluorescent material, an organic binder, and an organic solvent are mixed with each other is applied to an inner surface of a light transmissible container, such as soda glass, and, after the organic solvent volatilizes, it is burned so as to decompose and remove the organic binder. II the light transmissible container is tubular, the slurry is applied according to a method that causes the slurry to flow from an opened end of the tubular container. If flat, it is applied according to a spray method or screen printing method. If spherical, it is applied according to a soaking method.

The fluorescent layer is inevitable to include a fluorescent material that emits the aforementioned near-ultraviolet rays. A fluorescent layer for illumination can be formed by mixing fluorescent materials (for example, Y₂SiO₅:Ce, Y₃Al₅O₁₂:Ce, Y₃(Al,Ga)₅O₁₈, BaAl₁₂O₁₉:Mn, etc.) that emit visible light by the excitation of vacuum ultraviolet rays (with a wavelength of 147 nm, 172 nm, etc.) that rare gas, such as xenon, emits. The fluorescent layer that emits the aforementioned near-ultraviolet rays can also be layered on the fluorescent layer that emits visible light. Instead, known fluorescent materials that are excited by ultraviolet rays of 254 nm or 185 nm that mercury emits can be mixed with each other or be laminated. According to this structure, it is possible to provide a fluorescent lamp that emits visible light and near-ultraviolet rays whose emissive power has been heightened in a wavelength range of 300-400 nm in comparison with conventional ones. Visible light emission is useful as illumination when the lamp is used for, for example, a refrigerator. Especially by disposing the photocatalytic layer on the outer surface of or in the vicinity of the light transmissible airtight container, it is possible to provide a fluorescent lamp for photocatalysis in which the emissive power of near-ultraviolet rays has been heightened and photocatalysis operation has been improved. Further, it is possible to provide various ultraviolet fluorescent lamps capable of having peculiar effects on various devices by combining lamp types, i.e., types of light transmissible airtight containers (straight-tube type, goose neck type, flat type, etc.), with electrode operation modes (hot cathode, cold cathode, etc.), or with internal electrodes built in or not (electrodeless type, etc.), on the condition that the electrical discharge medium that emits vacuum ultraviolet rays and the fluorescent layer that emits near-ultraviolet rays are indispensable structural requirements.

Preferably, a photocatalytic layer is formed with a material largely composed of a metal oxide capable of demonstrating photocatalysis by absorbing near-ultraviolet rays of 300-400 nm, especially, a material largely composed of an anatase type titanium oxide (TiO₂). ZnO, MgO, Ce₂O₃, Tb₂O₃, WO₃, Fe₂O₃, LaRhO₃, FeTiO₃, SrTiO, GaAs, Gap, RuO₂, etc., are usable besides TiO₂. The photocatalytic layer is formed according to a method of directly applying a binder solution in which the aforementioned metal oxide and fine particles are dispersed and mixed onto the outer surface of a light transmissible container, such as glass, and drying them, or a method of applying and drying a metallic alkoxide solution and burning it to be a metal oxide film. Instead, another method can be used in which a photocatalytic layer is formed on a surface of a substrate, such as other glass, metals (for example, aluminum, copper, or iron), ceramics, or resin film, and the substrate provided with the pliotocatalytic layer is disposed in the vicinity of an ultraviolet fluorescent lamp.

Next, the examples of the present invention will be described.

### (First Example)

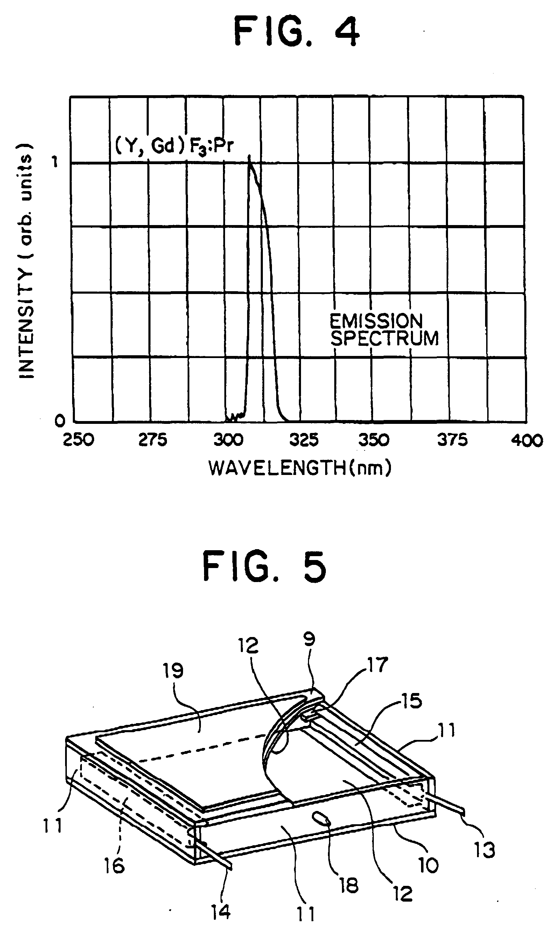

This example concerns an ultraviolet fluorescent lamp in which a photocatalytic layer is formed on the outer surface of a straight-tube type cold cathode fluorescent lamp. The straight-tube type ultraviolet fluorescent lamp has a structure shown by an enlarged sectional view of the main part in FIG. 2. Fluorescent layers 2 made of a gadolinium and praseodymium activated fluorinated yttrium (YF₃:Gd,Pr) fluorescent material that emits light by the excitation of vacuum ultraviolet rays and has a thickness of about 20 µm are formed on the inner wall of a light transmissible airtight container of a soda glass tube 1(outer diameter 4.0 mm, inner diameter 3.0 mm, length about 300 mm). Xenon gas of several-ten torr is enclosed in the glass tube 1. The fluorescent layer 2 is formed by flowing a mixed solution of a YF₃:Gd,Pr fluorescent material of 100 parts by weight, an organic binder of 30 parts by weight of polyvinyl alcohol, and pure water from an end opening of the glass tube 1 and applying the solution. Load wires 3 and 4 are enclosed in both ends of the glass tube 1, and cold cathodes 5 and 6 that are metallic plates of nickel-iron and are each folded in two are fixedly welded to the ends of the lead wires 3, 4, respectively. A Zr-Al alloy as a getter is formed on one side of each of the cold cathodes 5 and 6. The glass tube 1 is heated and degassed, and then the cold cathodes 5 and 6 are subjected to high frequency induction heating and are degassed. Thereafter, xenon is enclosed, and the glass tube 1 is firmly sealed. Impure gas in the glass tube 1 is adsorbed by the getter. The fluorescent material YF₃:Gd,Pr constituting the fluorescent layer 2 is excited by vacuum ultraviolet rays of a wavelength of 172 nm emitted from xenon because of electrical discharge, and emits near-ultraviolet rays of a wavelength of 300-400 nm efficiently. FIG. 3 shows an example of an emission spectrum. The peak wavelength is about 310 nm. On the other hand, a photocatalytic layer 7, having a film thickness of 0.2-0.3 µm, comprising and anatase crystal type of TiO₂ is formed on the outer surface of the glass tube 1. The formation method thereof is the same as the conventional one. When a high frequency voltage (for example, several tens of kilohertzs) is applied to the cold cathodes 5 and 6 so as to generate an electric discharge, and thereby vacuum ultraviolet rays of 172 nm are emitted from xenon, the fluorescent layer 2 efficiently emits near-ultraviolet rays. The photocatalytic layer 7 shows photocatalysis by the near-ultraviolet rays. It is noted that the shape of the light transmissible airtight container is not limited to the straight-tube type. It may be a bent-tube one (for example, letter U-shaped, annular, S-shaped, or spiral) or a flat one in which flat plates are disposed to face each other.

### (Second Example)

In this example, a straight-tube type cold cathode fluorescent lamp is formed in the same way as in the first example, except that the fluorescent layer 2 is formed with CaF₂:Gd,Pr instead of the YF₃:Gd,Pr fluorescent material.

### (Third Example)

In this example, a straight-tube type cold cathode fluorescent lamp is formed in the same way as in the first example, except that the fluorescent layer 2 is formed with (Y,Gd)F₃:Pr instead of the YF₃:Gd,Pr fluorescent material. FIG. 4 shows an example of an emission spectrum. The peak wavelength is about 310 nm.

### (Fourth Example)

In this example, a straight-tube type cold cathode fluorescent lamp is formed in the same way as in the first example, except that the fluorescent layer 2 is formed with LiGdF₄:Pr instead of the YF₃:Gd,Pr fluorescent material.

### (Fifth Example)

In this example, a straight-tube type cold cathode fluorescent lamp is formed in the same way as in the first example, except that the fluorescent layer 2 is formed with NaGdF₄:Pr instead of the YF₃:Gd,Pr fluorescent material.

### (Sixth Example)

In this example, a straight-tube type cold cathode fluorescent lamp is formed in the same way as in the first example, except that the fluorescent layer 2 is formed with BaGdF₅:Pr instead of the YF₃:Gd,Pr fluorescent material.

### (Seventh Example)

In this example, a straight-tube type cold cathode fluorescent lamp is formed in the same way as in the first example, except that the fluorescent layer 2 is formed with Li(Y,Gd)F₄:Pr instead of the YF₃:Gd,Pr fluorescent material.

### (Eighth Example)

In this example, a straight-tube type cold cathode fluorescent lamp is formed in the same way as in the first example, except that the fluorescent layer 2 is formed with Na(Y,Gd)F₄:Pr instead of the YF₃:Gd,Pr fluorescent material.

### (Ninth Example)

In this example, a straight-tube type cold cathode fluorescent lamp is formed in the same way as in the first example, except that the fluorescent layer 2 is formed with Ba(Y,Gd)F₅:Pr instead of the YF₃:Gd,Pr fluorescent material.

### (Tenth Example)

This example concerns a flat type fluorescent lamp on the outer surface of which a photocatalytic layer is formed. This lamp has a structure shown by a perspective view, with a part broken away, of FIG. 5. A flat type light transmissible airtight container (externals 100mm×50mm×9mm, glass thickness 2 mm) is formed by firmly sealing a pair of flat glasses 9 and 10 of soda lime and a side wall glass 11 formed like a frame with glass solder. A fluorescent layer 12 made of a YF₃:Gd,Pd fluorescent material that has a thickness of about 20 µm and emits light by the excitation of ultraviolet rays is formed on the inner surface of the flat glasses 9 and 10. Xenon gas of several tens of torr is enclosed in the airtight container. The fluorescent layer 12 is formed by screen-printing a mixed solution of a YF₃:Gd,Pr fluorescent material, an organic binder, and an organic solvent. Lead wires 13, 14 are firmly attached to the pair of side wall glasses 11, 11 facing each other, respectively. Hollow cathode type cold cathodes 15 and 16 that have molded a metallic plate of, for example, nickel into a letter U-shape are firmly welded to the ends of the lead wires 13 and 14, respectively. A getter 17 that forms a Zr-Al alloy is welded to the end of the cold cathode 15. The glass container is heated and degassed, and the cold cathodes 15, 16, and the getter 17 are subjected to high frequency induction heating and are degassed. Thereafter, xenon of several tens of torr is enclosed, and an exhaust duct 18 is sealed. On the other hand, a photocatalytic layer 19, having a film thickness of 0.2-0.3 µm, comprising an anatase crystal type of TiO₂ is formed on the outer surface of the flat glasses 9, 10. The formation method thereof is the same as the conventional one. When a high frequency voltage is applied to the cold cathodes 15 and 16 so as to generate an electric discharge, and thereby vacuum ultraviolet rays of 172 nm are emitted from xenon, the fluorescent layer efficiently emits near-ultraviolet rays. The photocatalytic layer 19 shows photocatalysis by the near-ultraviolet rays. As a modification, the fluorescent layer 12 can be made a thin film luminescent layer of, for example, YF₃:Gd,Pr, instead of the powdery fluorescent material, formed according to spattering, deposition, CVD, etc.

### (Eleventh Example)

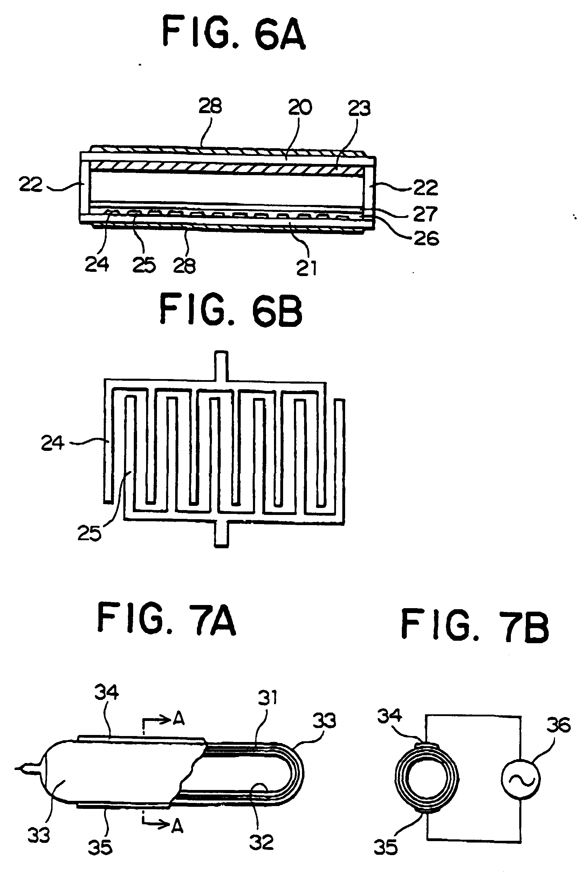

This is another example of the flat type fluorescent lamp. This lamp has a thin type structure shown by an enlarged sectional view of the main part in FIG. 6A. A flat type glass container (externals 100mm×50mm×6mm, glass thickness 2 mm) is formed by firmly sealing a pair of flat soda lime glass sheets 20 and 21 and a side wall glass 22 with glass solder. A fluorescent layer 23 made of a YF₃:Gd,Pd fluorescent material that has a thickness of about 20 µm and emits light by the excitation of ultraviolet rays is formed on the inner surface of the flat glass 20. Xenon gas of several tens of torr is enclosed in the airtight container. The fluorescent layer 23 is formed by screen-printing a mixed solution of a YF₃:Gd,Pr fluorescent material, an organic binder, and an organic solvent. On the other hand, a plurality of transparent electrodes 24 and 25, such as ITO, are juxtaposed to each other on the back face of the flat glass 21. They are covered with a dielectric layer 26 of, for example, SiO₂, and are further covered with a protective layer 27 or, for example, MgO according to a deposition method. As shown in FIG. 6B, the electrode formation is such that a pair of comb type electrodes 24 and 25 are alternately placed. The protective layer 27 serves to defend the dielectric layer 26 from sputtering caused by electrical discharge and increase a secondary electron emission coefficient so as to lower a starting voltage. The electrodes 24 and 25 can be exposed to a discharge space without using the dielectric layer 26 and the protective layer 27. On the other hand, a photocatalytic layer 28 that has a film thickness of 0.2-0.3 µm, comprising an anatase crystal type of TiO₂ is formed on the outer surface of the flat glasses 20, 21. The formation method thereof is the same as the conventional one. When a high frequency voltage is applied to the electrodes 24 and 25 so as to generate an electric discharge, and thereby vacuum ultraviolet rays of 172 nm are emitted from xenon, the fluorescent layer efficiently emits near-ultraviolet rays. The photocatalytic layer 28 shows photocatalysis by the near-ultraviolet rays. As a modification, if a similar fluorescent layer is formed also on the side of the back face flat glass 21, the emissive power of near-ultraviolet rays can be heightened. Additionally, if the photocatalytic layer 28 is formed also on the outer surface of the flat glass 21, the photocatalysis can be improved even more. The electrodes may be formed by the vapor deposition of aluminum. As a modification, the fluorescent layer 23 can be made a thin film luminescent layer of, for example, YF₃:Gd,Pr formed according to spattering, deposition, CVD, etc, instead of the powdery fluorescent material.

### (Twelfth Example)

This example concerns an ultraviolet fluorescent lamp comprising an electrodeless fluorescent lamp that does not have an electrode in the lamp, and excites discharge gas in the lamp by the application of a high frequency electromagnetic field from the outside, thereby causing a fluorescent material to emit light. This lamp has a structure shown by FIG. 7A, which is a partially sectional side view, and FIG. 7B, which is a sectional view along line A-A of FIG. 7A. A fluorescent layer 32 made of a YF₃:Gd,Pd fluorescent material that has a thickness of about 20 µm and emits light by the excitation of ultraviolet rays is formed on the inner surface of a light transmissible airtight container of a soda glass tube 31. Xenon gas of several tens of torr is enclosed in the airtight container 31. The fluorescent layer 32 is formed on the inner surface of the container 31 by pouring a mixed solution of a YF₃:Gd,Pr fluorescent material, an organic binder, and an organic solvent into the container and removing the solution. On the other hand, a photocatalytic layer 33, having a film thickness of 0.2-0.3 µm, comprising an anatase crystal type of TiO₂ is formed on the outer surface of the container 31. The formation method thereof is the same as the conventional one. When a high frequency voltage is applied to a pair of external electrodes 34 and 35 by the use of a high frequency power source 36 while sandwiching the electrodeless fluorescent lamp between the external electrodes 34 and 35 so as to generate an electric discharge, and thereby vacuum ultraviolet rays of 172 nm are emitted from xenon, and the fluorescent layer 32 efficiently emits near-ultraviolet rays. The photocatalytic layer 33 demonstrates photocatalysis by emitting near-ultraviolet rays. The electrodeless type ultraviolet fluorescent lamp has neither internal electrodes nor leads, and therefore it has longevity, is simple in structure, and cheap. It is noted that the shape of the light transmissible airtight container is not limited to the straight-tuba type. It may be a bent-tube one (for example, letter U-shaped, annular, S-shaped, or spiral), a flat one, or a light bulb-shaped one.

### (Comparative Example 1)

In this comparative example, a straight-tube type cold cathode fluorescent lamp is formed in the same way as in the first example, except that the fluorescent layer 2 is formed with a conventional YPO₄:Ce fluorescent material instead of the YF₃:Gd,Pr fluorescent material of the first example.

### (Comparative Example 2)

In this comparative example, a straight-tube type cold cathode fluorescent lamp is formed in the same way as in the first example, except that the fluorescent layer 2 is formed with a conventional BaSi₂O₅:Pb fluorescent material instead of the YF₃:Gd,Pr fluorescent material of the first example.

### (Comparative Example 3)

In this comparative example, a straight-tube type cold cathode fluorescent lamp is formed in the same way as in the first example, except that the fluorescent layer 2 is formed with a conventional SrB₄O₇:Eu fluorescent material instead of the YF₃:Gd,Pr fluorescent material of the first example.

### (Evaluation method and evaluation result of the ultraviolet fluorescent lamp)

The straight-tube type cold cathode fluorescent lamp in a state in which the photocatalytic layer is not formed in the first to ninth examples and in comparative examples 1 to 3 was lit in the same driving conditions, and the strength of near-ultraviolet rays at the position 5 mm distant from the surface of the glass container was measured. Relative values of the strength are shown in Table 1 on the supposition that the strength of ultraviolet rays in the first example is 1. A difference in the strength of near-ultraviolet rays in the respective examples and the comparative examples depends chiefly on the differences in the fluorescent layers. The strength of near-ultraviolet rays in each example of the present invention is considerably greater than the conventional one shown in each comparative example. Therefore, it is possible to provide an ultraviolet fluorescent lamp suitable for photocatalysis. The first, tenth, eleventh, and twelfth examples have the same fluorescent layer, but they are quite different in lamp formation. Thus, it is difficult to directly compare the ultraviolet ray strengths. However, in any lamp formation, an ultraviolet fluorescent lamp can be realized that is suitable for photocatalysis and has an ultraviolet ray strength sufficient for practical use.

**Table 1**

| | Composition of fluorescent material | Strength ratio of near-ultraviolet rays |
|---|---|---|
| Example 1 | YF₃:Gd,Pr | 1.00 |
| Example 2 | CaF₂:Gd,Pr | 0.95 |
| Example 3 | (Y,Gd)F₃:Pr | 0.90 |
| Example 4 | LiGdF₄:Pr | 0.8 |
| Example 5 | NaGdF₄:Pr | 0.8 |
| Example 6 | BaGdF₅:Pr | 0.6 |
| Example 7 | Li(Y,Gd)F₄:Pr | 0.7 |
| Example 8 | Na(Y,Gd)F₄:Pr | 0.7 |
| Example 9 | Ba(Y,Gd)F₅:Pr | 0.5 |
| Comparative Ex.1 | YPO₄:Ce | 0.13 |
| Comparative Ex.2 | BaSi₂O₅:Pb | 0.08 |
| Comparative Ex.3 | SrB₄O₇:Eu | 0.08 |

The ultraviolet emission material of the present invention is applicable not only to an ultraviolet fluorescent lamp but also to a solid ultraviolet luminescent element such as a laser medium of an ultraviolet region solid laser. As the laser medium, use can be made of, for example, crystals of fluorides (MgF₂, CaF₂, LiF₂, LiYF₄, YF₃, etc.) activated by rare earth elements, such as gadolinium and praseodymium of the present invention, or chlorides (KCl, NaCl, etc.). In that case, the concentration of an activating agent is optimized, of course. The laser comprises a rod or slab laser medium made of the ultraviolet emission material of the present invention, a vacuum ultraviolet ray source for exciting the laser medium, a light condenser, and a light reflector. In order to improve excitation efficiency by vacuum ultraviolet rays, ingenuity is required. For example, the container of a vacuum ultraviolet emission lamp is formed with material (quartz glass, for example) through which vacuum ultraviolet rays are transmitted; a light reflector is used for reflecting the vacuum ultraviolet rays efficiently; or, if necessary, the vacuum ultraviolet ray source and the laser medium are disposed in the same vacuum container.

As described above, since the ultraviolet emission material of the present invention includes rare earth elements that participate in luminescence and comprises at least Gd or Gd and Pr in a host crystal, a new ultraviolet fluorescent material and a new ultraviolet luminescent element can be provided. The ultraviolet fluorescent lamp of the present invention includes a light transmissible airtight container, an electric discharge medium that comprises rare gas and mercury enclosed in the container, an electrode to create an electric discharge, and a fluorescent layer made of the aforementioned fluorescent material and formed in the Container. Therefore, it is possible to provide an ultraviolet fluorescent lamp suitable for photocatalysis that is adaptable to various lamp formations and is excited by vacuum ultraviolet rays emitted by an electric discharge medium, thereby emitting near-ultraviolet rays in a wavelength range of 300-400 nm efficiently.

## Claims

1. An ultraviolet emission material including rare earth elements that participate in luminescence and comprise at least gadolinium in a host crystal.

2. An ultraviolet emission material including rare earth elements that participate in luminescence and comprise at least gadolinium and praseodymium in a host crystal.

3. The ultraviolet emission material according to claim 1 or 2, characterized by being an ultraviolet fluorescent material having a host crystal and an activating agent, wherein at least gadolinium and praseodymium are the activating agent.

4. The ultraviolet emission material according to claim 2, characterized by being an ultraviolet fluorescent material having a host crystal and an activating agent, wherein one of gadolinium and praseodymium constitutes the host crystal, and the other one is the activating agent.

5. The ultraviolet emission material according to claim 3, characterized in that the host crystal is one or more kinds of halides selected from alkali metals, alkaline earth metals, yttrium, Lanthanum and zinc.

6. The ultraviolet emission material according to claim 4, characterized in that the host crystal is one or more kinds of halides selected from alkali metals, alkaline earth matals, yttrium, Lanthanum, rare earth elements, and zinc.

7. The ultraviolet emission material according to claim 5 or 6, characterized in that the halide is fluoride.

8. The ultraviolet emission material according to claim 7, characterized by being a YF₃:Gd,Pr fluorescent material.

9. The ultraviolet emission material according to claim 7, characterized by being a (Yₓ,Gd₁₋ₓ)F₃:Pr fluorescent material (wherein 0<x<1).

10. An ultraviolet fluorescent lamp comprising:
a light transmissible airtight container (1);
an electric discharge medium, enclosed in the light transmissible airtight container (1), for emitting vacuum ultraviolet rays;
an electrode (5, 6) for an electric discharge; and
a fluorescent layer (2) formed in the light transmissible airtight container, the fluorescent layer (2) including the ultraviolet emission material of any one of claims 3 to 9.

11. The ultraviolet fluorescent lamp according to claim 10, characterized by further comprising a photocatalytic layer (7) formed outside the light transmissible airtight container (1).

12. The ultraviolet fluorescent lamp according to claim 10 or 11, characterized by being a fluorescent lamp of a cold cathode or a hot cathode.

13. The ultraviolet fluorescent lamp according to claim 10 or 11, characterized by being a flat type fluorescent lamp.

14. The ultraviolet fluorescent lamp according to claim 10 or 11, characterized by being an electrodeless fluorescent lamp.

15. An ultraviolet luminescent element using the ultraviolet luminescent material according to any one of claims 1 to 9.
